# EUROPÄISCHE PATENTANMELDUNG

(11) **EP 0 604 372 A1**
(43) Veröffentlichungstag der Anmeldung: **29.06.1994**
(21) Anmeldenummer: 93810884.2
(22) Anmeldetag: 15.12.1993
(51) Int. Cl.: C09D 9/00, C11D 3/43, C11D 3/18, C11D 3/20, C11D 1/34

(54) **Reinigungsmittel zur Entfernung von Graffiti-Farbaufträgen**

(30) Priorität: 24.12.1992 CH 3960/92
(71) Anmelder: Acklin, Hanspeter, CH-8212 Neuhausen am Rheinfall (CH); Jenzer, Kurt, CH-8620 Wetzikon (CH)
(72) Erfinder: Schmidhäusler, Rolf, CH-8844 Galgenen (CH)
(74) Vertreter: Hug Interlizenz AG

(57) **Zusammenfassung**

Das beschriebene Reinigungsmittel dient zur Entfernung von sogenannten Graffiti-Farbaufträgen. Es ist zu 100% biologisch abbaubar und giftklassenfrei. Es kann dadurch ohne spezielle Schutzmassnahmen verarbeitet und einfach durch Einleiten in die Kanalisation entsorgt werden. Die Anwendung ist einfach, wobei das Auftragen vorzugsweise mittels einer Bürste oder durch Einmassieren und das Abwaschen nach einer gewissen Einwirkungszeit mittels eines Hochdruckreinigers erfolgt. Bei glatten Oberflächen genügt sogar ein Abwaschen mit einem nassen Lappen.

## Beschreibung

### TECHNISCHES GEBIET

Die vorliegende Erfindung betrifft ein Reinigungsmittel zur Entfernung von sogenannten Graffiti-Farbaufträgen.

### STAND DER TECHNIK

Graffiti-Reiniger sind in grosser Anzahl bekannt und auf dem Markt erhältlich. Nur sehr wenige dieser Reiniger können jedoch als umweltfreundlich bezeichnet werden. Soweit bekannt, ist keiner der derzeit bekannten Graffiti-Reiniger vollständig biologisch abbaubar. So enthalten die bekannten Reiniger üblicherweise z.B. Benzinlaugen oder hochwertige Gifte. Daneben wird für fast jeden zu reinigenden Untergrund ein anderes Reinigungsmittel benötigt.

### DARSTELLUNG DER ERFINDUNG

Aufgabe der Erfindung ist es, ein Reinigungsmittel für Graffiti-Farbaufträge anzugeben, welches biologisch abbaubar, nach den derzeit in der Schweiz gültigen Vorschriften giftklassenfrei und für praktisch alle Untergründe universell anwendbar ist.

Diese Aufgabe wird erfindungsgemäss gelöst durch ein Reinigungsmittel, welches die in Patentanspruch 1 angegebenen Komponenten in den dort jeweils angegebenen Volumen-%-Anteilen enthält.

Bevorzugte Rezepturen für das erfindungsgemässe Reinigungsmittel sind in den abhängigen Patentansprüchen angegeben.

Unter den Komponenten des erfindungsgemässen Reinigungsmittels dienen der ethoxylierte Phosphorsäureester, die organischen, wasserlöslichen Amine sowie die Fettalkohol- bzw. Nonylphenolethoxylate zur Benetzung der zu entfernenden Farben sowie zur Emulgierung von Ölen und Fetten. Die beiden Glykolalkylether sowie die Orangenterpene dienen als Lösungsmittel. Das N-Methylpyrrolidon ist ein Quellmittel für Kunststoffe. Es weicht die in Kunststoffen enthaltenen Bindemittel auf, so dass die vorgenannten Emulgatoren und Lösungsmittel zur Wirkung kommen können.

Das erfindungsgemässe Mittel zeichnet sich zunächst durch seine Umweltverträglichkeit aus. Es kann in die Kanalisation geleitet werden, da es zu 100 % biologisch abbaubar ist. Entsprechende, von der eidgenössischen Materialprüfungs- und Forschungsanstalt St. Gallen/Schweiz durchgeführte Tests nach der Methode OECD 302 B ergaben, dass das erfindungsgemässe Mittel sogar als biologisch leicht abbaubar eingestuft werden kann und der biologische Abbau nach längstens etwa einem Monat vollständig abgeschlossen ist.

Zur Verarbeitung des erfindungsgemässen Mittels werden keine Gummihandschuhe oder Atemschutzmasken benötigt, da es giftklassenfrei ist. Die Giftklassenfreiheit wurde durch das eidgenössische Bundesamt für Gesundheitswesen nach Prüfung seiner Zusammensetzung bestätigt.

Das erfindungsgemässe Reinigungsmittel eignet sich schliesslich für fast jeden Untergrund. Wichtig ist allerdings die richtige Anwendungstechnik:

So empfiehlt sich auf Beton- und Sichtmaueroberflächen die mechanische Bearbeitung mit einer Bohrmaschine mit Nylonbürsten-Aufsatz. Zur Reinigung von Sandstein sollte dieser mit einem sog. Pad bearbeitet werden, da Sandstein porörs ist und bei porösen Oberflächen das erfindungsgemässe Mittel zur Erzielung eines guten Reinigungsergebnisses einmassiert werden sollte.

Nach dem Aufbringen und Einwirkenlassen von etwa 10 Minuten, muss das mit dem erfindungsgemässen Mittel behandelte Objekt mit Wasser abgewaschen werden. Das erfindungsgemässe Mittel sollte nicht auf der behandelten Oberfläche belassen werden, da sich dies negativ auf diese auswirken könnte.

Bei Beton-, Marmor-, Sandstein- oder Granitoberflächen erfolgt das Abwaschen am besten mit einem Hochdruckreiniger. Bei glatten Oberflächen wie z.B. bei gestrichenen Fassaden, Strassenschildern, Untergründen aus Metall, Glas, Autolack, Plastik oder Plexiglas genügt es dagegen, das Objekt mit einem nassen Lappen einfach sauber abzuwaschen.

Wie vorstehend bereits erwähnt, kann die beim Abwaschen anfallende Flüssigkeit ohne weiteres in die Kanalisation geleitet werden. Sie muss nicht umständlich aufgefangen und speziell entsorgt werden.

Die nachstehend angegebene, konkrete Zusammensetzung des erfindungsgemässen Mittels wird derzeit als die bevorzugte für die meisten Anwendungsfälle angesehen:
- 1%: ethoxylierter Phosphorsäureester;
- 1%: Triethanolamin;
- 1%: Fettalkoholethoxylate mit einem Trübungspunkt von ca. 40°C;
- 27%: N-Methylpyrrolidon;
- 22%: Propylenglykolmethylether;
- 27%%: Dipropylenmethylether;
- 21%: D-Limonen;

## Patentansprüche

1. Reinigungsmittel zur Entfernung von Graffiti-Farbaufträgen, umfassend folgende Komponenten:
0.1% - 20% ethoxylierter Phosphorsäureester;
0.01% - 25% organische, wasserlösliche Amine;
0.01% - 25% Fettalkoholethoxylate oder Nonylphenolethoxylate;
0.1% - 75% N-Methylpyrrolidon;
0.1% - 75% Propylenglykolalkylether;
0.1% - 75% Dipropylenglykolalkylether
0.1% - 40% Orangenterpene

2. Reinigungsmittel nach Anspruch 1, dadurch gekennzeichnet, dass die organischen, wasserlöslichen Amine Triethanolamin, Diethanolamin oder Monoethanolamin sind.

3. Reinigungsmittel nach Anspruch 1 oder 2, dadurch gekennzeichnet, dass die Fettalkohole der Fettalkoholethoxylate bzw. die Phenole der Nonylphenolethoxylate Kettenlängen von C8 bis C18 aufweisen.

4. Reinigungsmittel nach einem der Ansprüche 1 bis 3, dadurch gekennzeichnet, dass die Anzahl der Ethylenoxid-Addukte der Fettalkoholethoxylate bzw. der Nonylphenolethoxylate 2 bis 25 beträgt.

5. Reinigungsmittel nach einem der Ansprüche 1 bis 4, dadurch gekennzeichnet, dass die Fettalkohole der Fettalkoholethoxylate native oder Oxoalkohole sind.

6. Reinigungsmittel nach einem der Ansprüche 1 bis 5, dadurch gekennzeichnet, dass der Alkylrest des Propylenglykolalkylethers ein Methyl-, Ethyl-, Propyl- oder Butylrest ist.

7. Reinigungsmittel nach einem der Ansprüche 1 bis 6, dadurch gekennzeichnet, dass der Alkylrest des Dipropylenalkylethers ein Methyl-, Ethyl-, Propyl- oder Butylrest ist.

8. Reinigungsmittel nach einem der Ansprüche 1 bis 7, dadurch gekennzeichnet, dass die Orangenterpene D-Limonen sind.

9. Reinigungsmittel nach einem der Ansprüche 1 bis 8, umfassend folgende Komponenten:
1% - 5% ethoxylierter Phosphorsäureester;
1% - 5% Triethanolamin;
1% - 5% Fettalkoholethoxylate mit einem Trübungspunkt von ca. 40°C;
27% - 32% N-Methylpyrrolidon;
22% - 27% Propylenglykolmethylether;
27% - 32% Dipropylenmethylether;
5% - 12% D-Limonen;

10. Reinigungsmittel nach einem der Ansprüche 1 bis 8, gekennzeichnet durch folgende Zusammensetzung:
1% ethoxylierter Phosphorsäureester;
1% Triethanolamin;
1% Fettalkoholethoxylate mit einem Trübungspunkt von ca. 40°C;
27% N-Methylpyrrolidon;
22% Propylenglykolmethylether;
27%% Dipropylenmethylether;
21% D-Limonen;
